# EUROPÄISCHE PATENTANMELDUNG

(11) **EP 4 506 303 A1**
(43) Veröffentlichungstag der Anmeldung: **12.02.2025**
(21) Anmeldenummer: 23020369.7
(22) Anmeldetag: 07.08.2023
(51) Int. Cl.: C01B 3/38, C01B 3/48, C01B 3/50

(54) **VERFAHREN UND VORRICHTUNG ZUR KOHLENDIOXIDARMEN WASSERSTOFFERZEUGUNG**

(71) Anmelder: Linde GmbH, 82049 Pullach (DE)
(72) Erfinder: Haselsteiner, Thomas, 82049 Pullach (DE); Schwarzhuber, Josef, 82049 Pullach (DE); Seliger, Andreas, 82049 Pullach (DE); Müller-Thorwart, Ole, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoffprodukts (10), bei dem ein kohlenstoffhaltiger Einsatz (1) durch Reformierung (R) und Wassergas-Shift (S) umgesetzt wird, um ein Wasserstoff und Kohlendioxid enthaltenes Synthesegas (5) zu erhalten, aus dem in einem CO₂-Abtrennschritt (T) durch die Abtrennung von Kohlendioxid (7) Rohwasserstoff (6) entsteht, der durch wenigstens einen weiteren Verfahrensschritt zum Wasserstoffprodukt (10) aufbereitet wird, wobei ein Brennstoff (12) zur Gewinnung von Prozesswärme verbrannt und das aus dem Synthesegas (5) abgetrennte Kohlendioxid (7) durch Sequestrierung entsorgt oder stoffliche genutzt wird. Kennzeichnend hierbei ist, dass ein Teil des Synthesegases (5) oder ein Teil (9) des Rohwasserstoffs (6) zur Abtrennung von Kohlenstoffverbindungen (13) über eine Membran (M) geführt wird, um eine weitgehend aus Wasserstoff bestehende Gasfraktion zu erhalten, die als Brennstoff (12) eingesetzt wird.

## Beschreibung

Die Erfindung betrifft ein Verfahren zur Erzeugung eines Wasserstoffprodukts, bei dem ein kohlenstoffhaltiger Einsatz durch Reformierung und Wassergas-Shift umgesetzt wird, um ein Wasserstoff und Kohlendioxid enthaltenes Synthesegas zu erhalten, aus dem in einem CO₂-Abtrennschritt durch die Abtrennung von Kohlendioxid Rohwasserstoff entsteht, der durch wenigstens einen weiteren Verfahrensschritt zum Wasserstoffprodukt aufbereitet wird, wobei ein Brennstoff zur Gewinnung von Prozesswärme verbrannt und das aus dem Synthesegas abgetrennte Kohlendioxid durch Sequestrierung entsorgt oder stoffliche genutzt wird.

Außerdem betrifft die Erfindung eine Vorrichtung zur Durchführung des erfindungsgemäßen Verfahrens.

Wasserstoffprodukte wie Reinwasserstoff, der wenigstens zu 99,5mol-% aus Wasserstoff besteht, oder Ammoniaksynthesegas, in dem Wasserstoff und Stickstoff im Verhältnis 3:1 vorliegen, werden heute noch überwiegend aus kohlenstoffhaltigen Einsätzen unter Bildung und Freisetzung großer Mengen klimaschädlichen Kohlendioxids erzeugt. Doch gibt es verstärkt Anstrengungen, das anfallende Kohlendioxid nicht in die Atmosphäre zu entlassen, sondern durch Sequestrierung oder stoffliche Nutzung zu entsorgen.

Nach dem Stand der Technik wird zur Erzeugung eines Wasserstoffprodukts ein kohlenstoffhaltiger Einsatz, bei dem es sich etwa um Erdgas handelt, ggf. entschwefelt und anschließend beispielsweise durch Partielle Oxidation, Autothermalreformierung, Dampfreformierung oder eine Kombination von zwei oder mehr dieser Verfahren zu einem als Syntheserohgas bezeichneten Gasgemisch reformiert, das zu einem großen Teil aus Wasserstoff, Kohlenmonoxid sowie Kohlendioxid besteht und das daneben noch weitere Stoffe wie z.B. Methan oder Argon enthalten kann. Anschließend wird das Syntheserohgas einer Wassergas-Konvertierung unterzogen, um das enthaltene Kohlenmonoxid mit Wasser zu Wasserstoff und Kohlendioxid umzusetzen und ein weitgehend aus Wasserstoff und Kohlendioxid bestehendes Synthesegas zu gewinnen. In einem typischerweise als Sauergaswäsche durchgeführten CO₂-Abtrennschritt wird Kohlendioxid aus dem Synthesegas abgetrennt, wobei eine Kohlendioxidfraktion mit einer für ihre Sequestrierung oder stofflichen Nutzung ausreichenden Reinheit sowie eine als Rohwasserstoff bezeichnete Wasserstofffraktion, die Reste von Kohlenmonoxid, Kohlendioxid und Methan enthält, und deren Wasserstoffgehalt gewöhnlich bei ca. 98mol-% liegt, erhalten werden.

Zur Bildung des Wasserstoffprodukts wird der Rohwasserstoff beispielsweise durch Methanisierung, Partielle Kondensation, Stickstoffwäsche oder Druckwechseladsorption behandelt, wobei Kohlenmonoxid und Kohlendioxid nach Umwandlung zu Methan und Wasser oder direkt abgetrennt werden und eine weitgehend kohlen- und sauerstofffreie Wasserstofffraktion entsteht, die das Wasserstoffprodukt bildet oder aus der beispielsweise durch Zugabe von Stickstoff ein Ammoniaksynthesegas als Wasserstoffprodukt erhalten wird.

Mit den beschriebenen Methoden lassen sich nicht mehr als ca. 90% des zur Erzeugung des Wasserstoffprodukts eingesetzten Kohlenstoffs in Form von Kohlendioxid abtrennen und durch Sequestrierung entsorgen oder stofflich nutzen. Je nach den gesetzlichen Vorgaben und Pönalen, die auf die Kohlendioxidemissionen erhoben werden, kann es jedoch erforderlich sein, höhere Kohlenstoff-Abtrennquoten zu realisieren.

Aufgabe der vorliegenden Erfindung ist es daher, ein Verfahren der gattungsgemäßen Art sowie eine Vorrichtung zu dessen Durchführung anzugeben, die es erlauben, Kohlenstoff-Abtrennquoten von mehr als 90% zu erreichen.

Diese Aufgabe wird verfahrensseitig erfindungsgemäß dadurch gelöst, dass ein Teil des Synthesegases oder ein Teil des Rohwasserstoffs zur Abtrennung von Kohlendioxid über eine Membran geführt wird, um eine weitgehend aus Wasserstoff bestehende Gasfraktion zu erhalten, die als Brennstoff eingesetzt wird.

Wird Rohwasserstoff zum Erhalt des Brennstoffs eingesetzt, so umfasst die Aufbereitung des Rohwasserstoffs zum Wasserstoffprodukt auch die Aufteilung des Rohwasserstoffs in zumindest einen ersten und einen zweiten Teil, wobei aus dem ersten Teil in wenigstens einem weiteren Verfahrensschritt das Wasserstoffprodukt entsteht und der zweite Teil zur Abtrennung von Kohlenstoff enthaltenden Komponenten wie Kohlenmonoxid, Kohlendioxid und Methan über die Membran geführt wird.

Der Wasserstoff, der in der über die Membran zu trennenden Gasfraktionen vorliegt, stellt die "schnelle" Gaskomponente dar, die die Membran wesentlich leichter passieren kann als die ebenfalls in der Gasfraktion enthaltenen Kohlenstoffverbindungen Kohlendioxid, Kohlenmonoxid und Methan. Der erhaltene Permeatstrom, der die weitgehend aus Wasserstoff bestehende Gasfraktion darstellt, liegt daher auf einem deutlich niedrigeren Druckniveau vor als der ohne wesentlichen Druckverlust erhältliche Retentatstrom, der den überwiegenden Anteil, der in der zu trennenden Gasfraktion vorliegenden Kohlenstoffverbindungen umfasst. Sinnvollerweise wird der Retentatstrom zurückgeführt und gemeinsam mit dem kohlenstoffhaltigen Einsatz in die Reformierung eingeleitet, was aufgrund des geringen Druckunterschieds zwischen den beiden Stoffströmen mit wenig Aufwand möglich ist.

Vorzugsweise wird so viel Synthesegas bzw. Rohwasserstoff über die Membran getrennt, dass die weitgehend aus Wasserstoff bestehenden Gasfraktion in einer Menge erhalten wird, die ausreicht, um mit ihr den Heizenergiebedarf der Wasserstofferzeugung vollständig zu decken. Sinnvollerweise wird die weitgehend aus Wasserstoff bestehende Gasfraktion in einer Menge gebildet, die genau zur Deckung des Heizenergiebedarf ausreicht. Möglich ist es aber auch, eine größere Menge der weitgehend aus Wasserstoff bestehenden Gasfraktion zu bilden und den nicht im Prozess einsetzbaren Teil gegen Gutschrift zu exportieren.

Nicht ausgeschlossen soll es sein, die weitgehend aus Wasserstoff bestehende Gasfraktion in einer Menge zu gewinnen, die nur dazu ausreicht, einen Teil des Heizenergiebedarfs der Wasserstofferzeugung zu decken, und die verbleibende Lücke sinnvollerweise durch eine kohlendioxidfrei, etwa mit "grünem" Strom erzeugte Heizenergie zu schließen.

Bevorzugt wird die weitgehend aus Wasserstoff bestehende Gasfraktion verbrannt, um für den Prozess benötigten Dampf zu gewinnen oder um einen Einsatzstoff für die Reformierung vorzuwärmen. Möglich ist es aber auch, einen zur Reformierung eingesetzten Dampf- oder Vorreformer mit dem Brennstoff zu beheizen.

Das erfindungsgemäße Verfahren eignet sich insbesondere zur Verwendung in einer Ammoniaksynthese, wobei der nicht über die Membran geführte Rohwasserstoff durch Methanisierung und/oder Stickstoffwäsche und/oder Stickstoffzugabe zu einem Einsatzgas für eine Ammoniaksynthese aufbereitet wird.

Die Umsetzung des kohlenstoffhaltigen Einsatzes kann im Rahmen des erfindungsgemäßen Verfahrens durch Partielle Oxidation, Autothermalreformierung, Dampfreformierung oder eine Kombination von zwei oder mehr dieser Verfahren erfolgen, denen eine Vorreformierung vorangehen kann. Mit besonderem Vorzug kann das erfindungsgemäße Verfahren dann eingesetzt werden, wenn der kohlenstoffhaltige Einsatz durch Autothermalreformierung oder Partielle Oxidation umgesetzt wird. Anders als beim Einsatz eines Dampfreformers, werden in diesen Fällen nur kleine, beispielsweise zur Anwärmung von Einsatzstoffen oder zur Dampferzeugung verwendete Öfen unter Freisetzung von vergleichsweise geringen Rauchgasmengen in die Atmosphäre beheizt. Um den Heizenergiebedarf dieser Öfen durch die weitgehend aus Wasserstoff bestehende Gasfraktion decken zu können, braucht nur ein kleiner Anteil des Synthesegases bzw. des Rohwasserstoffs über die Membran getrennt zu werden.

Zur Abtrennung von Kohlendioxid aus Synthesegas sind aus dem Stand der Technik verschiedene Trennmethoden bekannt. Insbesondere können in einem CO₂-Abtrennschritt Kombinationsverfahren aus Membrantrennung, Druckwechseladsorption und kryogener Gaszerlegung zum Einsatz kommen. Vorzugsweise wird der CO₂-Abtrennschritt als Sauergaswäsche durchgeführt, bei der beispielsweise eine alkalische wässrige Aminlösung als Waschmittel dient.

Weiterhin betrifft die Erfindung eine Vorrichtung zur Erzeugung eines Wasserstoffprodukts, mit einer Reformiereinrichtung und einer mit der Reformiereinrichtung verbundenen Wassergas-Shift, über die ein kohlenstoffhaltiger Einsatz durch Reformierung und Wassergas-Shift zu einem Wasserstoff und Kohlendioxid enthaltenen Synthesegas umgesetzt werden kann, sowie einer CO₂-Abtrennung zur Abtrennung von Kohlendioxid aus dem Synthesegas und zum Erhalt von Rohwasserstoff, der in einer mit der Gaswäsche verbundenen Aufbereitungseinrichtung zum Wasserstoffprodukt aufbereitet werden kann, sowie einer Verbrennungseinrichtung, in der ein Brennstoff zur Gewinnung von Prozesswärme verbrennbar ist, wobei die CO₂-Abtrennung mit einer Einrichtung zur Sequestrierung oder stofflichen Nutzung des aus dem Synthesegas abgetrennten Kohlendioxids verbunden oder verbindbar ist.

Die gestellte Aufgabe wird vorrichtungsseitig erfindungsgemäß dadurch gelöst, dass sie eine mit der Verbrennungseinrichtung verbundene Membraneinheit sowie einen stromaufwärts oder stromabwärts der CO₂-Abtrennung angeordneten Strömungsteiler umfasst, über den ein Teil des Synthesegases oder ein Teil des Rohwasserstoffs in die Membrantrenneinheit einleitbar ist, um durch die Abtrennung von Kohlenstoffverbindungen eine weitegehend aus Wasserstoff bestehende Gasfraktion zu erhalten, die der Verbrennungseinrichtung als Brennstoff zuführbar ist.

Zweckmäßigerweise ist die Membraneinheit so ausgeführt, dass die weitegehend aus Wasserstoff bestehenden Gasfraktion als Permeatstrom erhältlich ist.

In einer bevorzugten Ausgestaltung der erfindungsgemäßen Vorrichtung ist die Membraneinheit mit der Reformiereinheit derart verbunden, dass zumindest ein Teil der aus dem Rohwasserstoff abgetrennten Kohlenstoffverbindungen wie insbesondere Kohlendioxid, Kohlenmonoxid und Methan als Einsatz in die Reformiereinheit zurückgeführt werden kann.

Bei der Verbrennungseinrichtung handelt es sich beispielsweise um einen brennerbefeuerten Ofen, mit dem ein der Reformiereinrichtung zuzuführender Einsatz anwärmbar ist. Die Verbrennungseinrichtung kann aber auch ein brennerbefeuerter Dampferzeuger sein, der zur Erzeugung von Prozessdampf einsetzbar ist, oder ein Dampf- oder Vorreformer der Reformiereinrichtung, der über einen Brenner beheizt werden kann.

Eine weitere Ausgestaltung der erfindungsgemäßen Vorrichtung sieht eine Aufbereitungseinrichtung vor, die einen Druckwechseladsorber umfasst, der es erlaubt, aus Rohwasserstoff Reinwasserstoff mit einem Wasserstoffgehalt von mehr als 99,5mol-% zu erhalten. Der Reinwasserstoff kann als Wasserstoffprodukt abgegeben oder zum Wasserstoffprodukt weiterbehandelt werden.

Vorzugsweise ist die Aufbereitungseinrichtung mit einer Ammoniaksynthese verbunden und dazu eingerichtet, den Rohwasserstoff zu einem Ammoniaksynthesegas aufzubereiten, das der Ammoniaksynthese als Einsatzgas zuführbar ist. Die Aufbereitungseinrichtung kann hierbei beispielsweise einen Druckwechseladsorber zur Erzeugung von Reinwasserstoff und eine Stickstoffzuführung umfassen, über die der Reinwasserstoff zum Ammoniaksynthesegas mischbar ist. Möglich ist es aber auch, dass die Aufbereitungseinrichtung einen Methanisierer oder eine partielle Kondensation oder eine Stickstoffwäsche umfasst.

Eine für die erfindungsgemäße Vorrichtung besonders geeignete Reformiereinrichtung ist mit einem Autothermalreformer oder einen Partialoxidationsreaktor ausgeführt, die lediglich für brennerbefeuerte Hilfsaggregate, wie etwa zur Anwärmung von Einsatzstoffen einsetzbare Öfen, einen Brennstoff benötigen, weshalb nur wenig Synthesegas zur Gewinnung des weitgehend aus Wasserstoff bestehenden Brenngases abgezweigt werden muss, um das Wasserstoffprodukt ohne bzw. mit nur sehr geringer Freisetzung von Kohlendioxid in die Atmosphäre erzeugen zu können. Es soll aber nicht ausgeschlossen sein, dass die Reformiereinrichtung mit einem Dampf- oder Vorreformer ausgeführt ist.

Die CO₂-Abtrennung kann als Kombination aus Membrantrennung, Druckwechseladsorption und kryogener Gaszerlegung ausgeführt sein. Vorzugsweise handelt es sich bei der CO₂-Abtrennung aber um eine Sauergaswäsche, in der beispielsweise eine alkalische wässrige Aminlösung als Waschmittel dient.

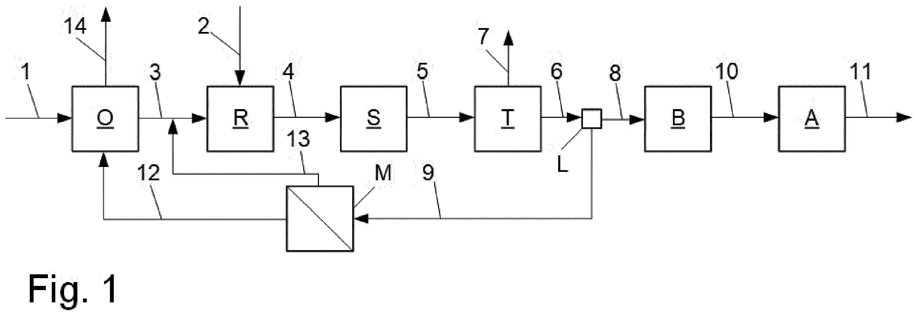

Im Folgenden soll die Erfindung anhand eines in der **Figur 1** schematisch dargestellten Ausführungsbeispiels näher erläutert werden.

Das Ausführungsbeispiel der Figur 1 zeigt eine bevorzugte Ausgestaltung des erfindungsgemäßen Verfahrens, bei der als Wasserstoffprodukt ein Ammoniaksynthesegas unter Verwendung eines Autothermalreformers erzeugt wird.

Dem brennerbefeuerten Ofen O wird ein kohlenstoffhaltiger Einsatz 1, bei dem es sich vorzugsweise um Methan handelt, zugeführt, um angewärmt zu werden. Gemeinsam mit Sauerstoff 2 wird der angewärmte Einsatz 3 im Autothermalreformer R zu einem Wasserstoff, Kohlenmonoxid und Wasser umfassenden Syntheserohgas 4 umgesetzt, aus dem im Wassergas-Konverter S ein weitgehend aus Wasserstoff und Kohlendioxid bestehende Synthesegas 5 erhalten wird. In der CO₂-Abtrennung T wird vorzugsweise ein Aminwaschmittel dazu eingesetzt, um Kohlendioxid aus dem Synthesegas 5 abzutrennen und eine wasserstoffreiche, Kohlenmonoxid, Methan und Reste von Kohlendioxid umfassende, als Rohwasserstoff bezeichnete Gasfraktion 6 sowie eine Kohlendioxidfraktion 7 zu erhalten, die durch Sequestrierung entsorgt oder stofflich genutzt wird (beides nicht dargestellt).

Der Rohwasserstoff 6 wird über den Strömungsteiler L in einen ersten 8 und einen zweiten Rohwasserstoffteilstrom 9 geteilt, von denen der erste 8 in der Aufbereitungseinrichtung B beispielsweise durch eine Kombination von Methanisierung, partieller Kondensation, Stickstoffwäsche und Stickstoffzumischung zu einem Ammoniaksynthesegas 10 aufbereitet wird, das weitegehend frei von Sauerstoff enthaltenden Komponenten, insbesondere von Kohlenmonoxid ist und in dem Wasserstoff und Stickstoff in dem für die nachfolgende Ammoniaksynthese A stöchiometrischen Verhältnis von 3:1 vorliegen. Das in der Ammoniaksynthese A erhaltene Ammoniak 11 kann in flüssiger Form gespeichert werden (nicht dargestellt).

Der zweite Rohwasserstoffteilstrom 9 wird in der Membraneinheit M in einen wasserstoffreichen, weitgehend kohlenstofffreien Permeatstrom 12 und einen Retentatstrom 13 getrennt. Da der, den überwiegenden Teil der im Rohwasserstoffteilstrom 9 vorliegenden Kohlenstoffverbindungen enthaltende Retentatstrom 13 im Wesentlichen mit dem Druck des Rohwasserstoffteilstroms 9 erhalten wird, kann er mit geringem Verdichtungsaufwand (nicht dargestellt) zurückgeführt und im Autothermalreformer R eingesetzt werden. Der weitgehend aus Wassersoff bestehende und Kohlenstoff in Form von Kohlenmonoxid, Kohlendioxid und Methan nur in geringen Mengen enthaltende Permeatstrom 12 wird im brennerbefeuerten Ofen O als Brenngas eingesetzt, bei dessen Verbrennung ein Rauchgas 14 entsteht, das nur sehr wenig Kohlendioxid enthält. Die Größe des zweiten Rohwasserstoffteilstroms 9 wird dabei über den Strömungsteiler L so eingestellt, dass die Menge des Brenngases 12 ausreicht, um die für die Anwärmung des Einsatzes 1 benötigte Wärme vollständig bereitzustellen, so dass auf die Verfeuerung eines kohlenstoffhaltigen Brennstoffs verzichtet werden kann.

## Patentansprüche

1. Verfahren zur Erzeugung eines Wasserstoffprodukts (10), bei dem ein kohlenstoffhaltiger Einsatz (1) durch Reformierung (R) und Wassergas-Shift (S) umgesetzt wird, um ein Wasserstoff und Kohlendioxid enthaltenes Synthesegas (5) zu erhalten, aus dem in einem CO₂-Abtrennschritt (T) durch die Abtrennung von Kohlendioxid (7) Rohwasserstoff (6) entsteht, der durch wenigstens einen weiteren Verfahrensschritt zum Wasserstoffprodukt (10) aufbereitet wird, wobei ein Brennstoff (12) zur Gewinnung von Prozesswärme verbrannt und das aus dem Synthesegas (5) abgetrennte Kohlendioxid (7) durch Sequestrierung entsorgt oder stoffliche genutzt wird, **dadurch gekennzeichnet, dass** ein Teil des Synthesegases (5) oder ein Teil (9) des Rohwasserstoffs (6) zur Abtrennung von Kohlenstoffverbindungen (13) über eine Membran (M) geführt wird, um eine weitgehend aus Wasserstoff bestehende Gasfraktion zu erhalten, die als Brennstoff (12) eingesetzt wird.

2. Verfahren nach Anspruch 1, **dadurch gekennzeichnet, dass** die weitgehend aus Wasserstoff bestehende Gasfraktion (12) bei der Membranabtrennung (M) als Permeat erhalten wird.

3. Verfahren nach einem der Ansprüche 1 oder 2, **dadurch gekennzeichnet, dass** die über die Membran abgetrennten Kohlenstoffverbindungen (13) vor die Reformierung (R) zurückgeführt werden.

4. Verfahren nach einem der Ansprüche 1 bis 3, **dadurch gekennzeichnet, dass** die weitgehend aus Wasserstoff bestehenden Gasfraktion (12) in einer Menge erzeugt wird, die ausreicht, um mit ihr den Heizenergiebedarf der Wasserstofferzeugung vollständig zu decken.

5. Verfahren nach einem der Ansprüche 1 bis 4, **dadurch gekennzeichnet, dass** die weitgehend aus Wasserstoff bestehenden Gasfraktion (12) verbrannt wird, um für den Prozess benötigten Dampf zu gewinnen oder um einen Einsatzstoff (1) für die Reformierung (R) vorzuwärmen oder um einen zur Reformierung (R) eingesetzten Dampfreformer oder einen Vorreformer zu beheizen.

6. Verfahren nach einem der Ansprüche 1 bis 5, **dadurch gekennzeichnet, dass** der nicht über die Membran geführte Rohwasserstoff (8) durch Methanisierung und/oder Stickstoffwäsche und/oder Druckwechseladsorption und/oder Partieller Kondensation und/oder Stickstoffzugabe zu einem Einsatzgas für eine Ammoniaksynthese (10) aufbereitet wird.

7. Verfahren nach einem der Ansprüche 1 bis 6, **dadurch gekennzeichnet, dass** der CO₂-Abtrennschritt (T) als Sauergaswäsche ausgeführt wird.

8. Verfahren nach einem der Ansprüche 1 bis 7, **dadurch gekennzeichnet, dass** die Reformierung (R) durch Autothermalreformierung oder Partielle Oxidation oder Dampfreformierung oder einer Kombination von zwei oder mehr dieser Methoden durchgeführt wird.

9. Vorrichtung zur Erzeugung eines Wasserstoffprodukts (10), mit einer Reformiereinrichtung (R) und einer mit der Reformiereinrichtung verbundenen Wassergas-Shift (S), über die ein kohlenstoffhaltiger Einsatz (1) durch Reformierung und Wassergas-Shift zu einem Wasserstoff und Kohlendioxid enthaltenen Synthesegas (5) umgesetzt werden kann, sowie einer CO₂-Abtrennung (T) zur Abtrennung von Kohlendioxid (7) aus dem Synthesegas (5) und zum Erhalt von Rohwasserstoff (6), der in einer mit der Gaswäsche verbundenen Aufbereitungseinrichtung (B) zum Wasserstoffprodukt (10) aufbereitet werden kann, sowie einer Verbrennungseinrichtung (O), in der ein Brennstoff (12) zur Gewinnung von Prozesswärme verbrennbar ist, wobei die Kohlendioxidabtrenneinrichtung (T) mit einer Einrichtung zur Sequestrierung oder stofflichen Nutzung des aus dem Synthesegas abgetrennten Kohlendioxids verbunden oder verbindbar ist, **dadurch gekennzeichnet, dass** sie eine mit der Verbrennungseinrichtung (O) verbundene Membraneinheit (M) sowie einen stromaufwärts oder stromabwärts der CO₂-Abtrennung (T) angeordneten Strömungsteiler (L) umfasst, über den ein Teil des Synthesegases (5) oder ein Teil (9) des Rohwasserstoffs (6) in die Membrantrenneinheit (M) einleitbar ist, um durch die Abtrennung von Kohlenstoffverbindungen eine weitegehend aus Wasserstoff bestehenden Gasfraktion (12) zu erhalten, die der Verbrennungseinrichtung (O) als Brennstoff zuführbar ist.

10. Vorrichtung nach Anspruch 9, **dadurch gekennzeichnet, dass** die weitegehend aus Wasserstoff bestehenden Gasfraktion (12) als Permeatstrom erhalten wird.

11. Vorrichtung nach einem der Ansprüche 9 oder 10, **dadurch gekennzeichnet, dass** aus dem Rohwasserstoff (6) abgetrennte Kohlenstoffverbindungen (13) aus der Membraneinheit (M) vor die Reformiereinrichtung (R) zurückgeführt werden kann.

12. Vorrichtung nach einem der Ansprüchen 9 bis 11, **dadurch gekennzeichnet, dass** die Verbrennungseinrichtung (O) als brennerbefeuerter Ofen zur Anwärmung des Einsatzes (1) oder als brennerbefeuerter Dampferzeuger zur Erzeugung von Prozessdampf oder als über einen Brenner beheizbarer Dampf- oder Vorreformer ausgeführt ist.

13. Vorrichtung nach einem der Ansprüchen 9 bis 12, **dadurch gekennzeichnet, dass** die Aufbereitungseinrichtung (B) einen Methanisierer und/oder eine Stickstoffwäsche und/oder einen Druckwechseladsorber und/oder eine Partielle Kondensation und/oder Stickstoffzuführung umfasst, über die nicht in die Membraneinheit (M) geführter Rohwasserstoff (8) zu einem Einsatzgas (10) für eine Ammoniaksynthese (A) aufbereitet werden kann.

14. Vorrichtung nach einem der Ansprüche 9 bis 13, **dadurch gekennzeichnet, dass** die Reformiereinrichtung (R) als Autothermalreformer oder als Partialoxidationsreaktor oder als Dampfreformer oder als Kombination von zwei oder mehr dieser Einrichtungen ausgeführt ist.
